# DEMANDE DE BREVET EUROPEEN

(11) **EP 0 962 633 A1**
(43) Date de publication de la demande: **08.12.1999**
(21) Numéro de dépôt: 99400984.3
(22) Date de dépôt: 22.04.1999
(51) Int. Cl.: F02B 23/10, F02B 17/00, F02F 1/42

(54) **Moteur à combustion interne à allumage commandé et à injection directe**

(30) Priorité: 05.05.1998 FR 9805676
(71) Demandeur: RENAULT, 92109 Boulogne-Billancourt (FR)
(72) Inventeur: Cuvillier, Paul, 27200 Vernon (FR); Lucas, Jean-Christophe, 95000 Cergy (FR); Floch, Alain, 91460 Marcoussis (FR)

(57) **Abrégé**

L'invention propose un moteur à combustion interne, à allumage commandé et à injection directe, du type dans le quel chaque cylindre comporte deux conduits d'admission (24, 25) et au moins un conduit d'échappement (28), du type dans lequel au moins un des conduits d'admission (24, 25) comporte des moyens pour créer dans le cylindre un mouvement tourbillonnaire dit de "swirl", et du type dans lequel le piston (22) comporte un évidement (46) en direction duquel le carburant est injecté par un injecteur (42),
caractérisé en ce que l'évidement (46) comporte une paroi de fond (56) qui est sensiblement plane et qui est inclinée par rapport à un plan horizontal.

## Description

L'invention concerne un moteur à combustion interne à allumage commandé et à injection directe.

L'invention concerne plus particulièrement un moteur à combustion interne à allumage commandé et à injection directe, du type dans lequel un cylindre d'axe vertical est délimité axialement vers le haut par une face inférieure d'une culasse dans laquelle débouchent, chacun par l'intermédiaire d'une soupape correspondante, deux conduits d'admission et au moins un conduit d'échappement, les soupapes d'admission et d'échappement étant agencées respectivement de part et d'autre d'un plan de référence contenant l'axe du cylindre, du type dans lequel au moins un des conduits d'admission comporte des moyens pour créer dans le cylindre un mouvement tourbillonnaire dit de "swirl" dans lequel les gaz contenus dans le cylindre sont animés d'un mouvement de rotation autour d'un axe sensiblement parallèle à l'axe du cylindre, et du type dans lequel le cylindre est délimité axialement vers le bas par un piston dont une face supérieure comporte un évidement en direction duquel le carburant est injecté par un injecteur.

Les moteurs à combustion interne et à allumage commandé ont grand avantage à être mis en oeuvre avec un dispositif d'injection directe du carburant dans le cylindre.

En effet, l'utilisation de l'injection directe permet d'optimiser le fonctionnement du moteur avec des mélanges dits "pauvres", c'est-à-dire des mélanges carburés dans lesquels il existe un fort excès d'air par rapport à la quantité de carburant introduite dans le cylindre.

L'utilisation des mélanges pauvres permet notamment de réduire de manière importante la consommation de carburant mais aussi de réduire la température maximale atteinte au cours de la combustion, ce qui permet de diminuer la production de substances polluantes telles que les oxydes d'azote (NOx).

De même, l'excès d'air permet d'éviter qu'une partie du carburant reste imbrûlée après la combustion et soit évacuée avec les gaz d'échappement.

L'utilisation d'un mélange "pauvre" est toutefois à la source d'un certain nombre de problèmes. Notamment, l'allumage de la combustion du mélange air/carburant est rendu plus difficile du fait de la faible proportion de carburant par rapport à l'air.

Dans le but de contourner ce problème, on cherche donc à faire fonctionner les moteurs à allumage commandé, lorsqu'ils sont alimentés en mélanges "pauvres", selon le principe des charges stratifiées dans lesquelles le mélange carburé n'a pas une composition homogène dans tout le cylindre. On cherche ainsi à provoquer une plus grande concentration du carburant à proximité de la bougie d'allumage de telle sorte que l'étincelle que celle-ci produit puisse provoquer facilement le démarrage de la combustion dans le cylindre.

On connaît différentes solutions qui permettent de réaliser des charges stratifiées grâce à l'injection directe.

Une première consiste à positionner l'injecteur et la bougie de telle manière que le jet de carburant est projeté directement par l'injecteur en direction de la bougie. Cette méthode est a priori très performante mais elle est très sensible aux incertitudes de positionnement des différents éléments et, encore plus, à l'encrassement du nez d'injecteur qui peut modifier notablement les caractéristiques du jet de carburant. Au fil du temps, le moteur ainsi réalisé peut nécessiter de fréquents réglages sous peine de voir se produire de nombreux "ratés" d'allumage.

Une seconde solution connue consiste à réaliser une stratification par effet de paroi en dirigeant le jet de carburant en direction d'une paroi, par exemple la face supérieure du piston, pour le défléchir ensuite en direction de la bougie. Un moteur mettant en oeuvre cette solution est par exemple décrit dans le document EP-A-0.694.682.

Dans ce document, il est plus particulièrement décrit un moteur dont le piston de chaque cylindre est muni d'un évidement à fond plat qui est destiné à canaliser le mouvement de "swirl" des gaz dans le cylindre. Les mouvement des gaz s'effectue donc essentiellement dans un plan horizontal au fond de l'évidement. Le jet de carburant étant par ailleurs projeté à l'intérieur de l'évidement, il se forme donc au niveau de la face supérieure du piston un mélange carburé relativement riche.

Or, dans ce type de moteurs, la bougie d'allumage est généralement implantée au centre de la face inférieure de la culasse. Aussi, pour assurer une bonne inflammation du mélange carburé, il est nécessaire de prévoir que les électrodes de la bougie se trouvent à proximité de la face supérieure du piston au moment de l'allumage.

Cette nécessité est parfois difficile à respecter, par exemple lorsque la face inférieure de la culasse est configurée en toit avec un fort angle. Pour que les électrodes soient suffisamment proches de la partie la plus riche du mélange carburé, il faut alors que celles-ci soient projetées d'une distance relativement importante à l'intérieur du cylindre.

L'invention a donc pour objet de proposer une solution globale quant à la géométrie et à l'implantation des éléments essentiels d'un moteur à combustion interne et à allumage commandé qui permette d'obtenir un fonctionnement optimal du moteur avec des charges "pauvres" stratifiées.

Dans ce but, l'invention propose un moteur du type décrit précédemment, caractérisé en ce que l'évidement comporte une paroi de fond qui est sensiblement plane et qui est inclinée par rapport à un plan horizontal.

Selon d'autres caractéristiques de l'invention :
- la ligne de plus grande pente de la paroi de fond de l'évidement est sensiblement parallèle au plan de référence ;
- la pente de la paroi de fond est de l'ordre de 15 degrés par rapport à l'horizontale ;
- un premier des conduits d'admission, qui comporte des moyens pour créer le mouvement tourbillonnaire, est agencé de manière à déboucher en regard de la partie la plus basse de la paroi de fond de l'évidement ;
- l'évidement est délimité par une paroi latérale munie d'un bossage qui s'étend radialement vers l'intérieur et qui est agencé sensiblement en regard du second conduit d'admission ;
- le second conduit d'admission est dépourvu de moyens pour créer le mouvement tourbillonnaire ;
- le second conduit d'admission est pourvu de moyens de vannage qui permettent de limiter la quantité d'air admis dans le cylindre au travers du second conduit ;
- l'évidement est décalé radialement par rapport à l'axe du cylindre en direction des soupapes d'admission ;
- le cylindre comporte une bougie d'allumage qui est implantée sensiblement au centre de la face inférieure de la culasse ;
- l'injecteur est agencé pour déboucher dans la face inférieure de la culasse, entre les deux conduits d'admission ;
- la face inférieure de la culasse est conformée selon un toit à deux pans inclinés de part et d'autre d'une arête sommitale qui est sensiblement comprise dans le plan de référence ;
- l'angle du toit est compris entre 125 et 150 degrés.

D'autres caractéristiques et avantages de l'invention apparaîtront à la lecture de la description détaillée qui suit pour la compréhension de laquelle on se reportera aux dessins annexés dans lesquels :
- la figure 1 est une vue partielle et schématique en coupe axiale d'un cylindre d'un moteur conforme aux enseignements de l'invention ;
- la figure 2 est une vue en perspective illustrant plus particulière la forme du piston du moteur de la figure 1 ainsi que son orientation par rapport aux conduits d'admission et d'échappement ;
- la figure 3 est une vue de dessus de la face supérieure du piston sur laquelle on a également illustrée la position relative des soupapes par rapport au piston ; et
- la figure 4 est une vue en coupe axiale du piston selon la ligne 4-4 de la figure 3.

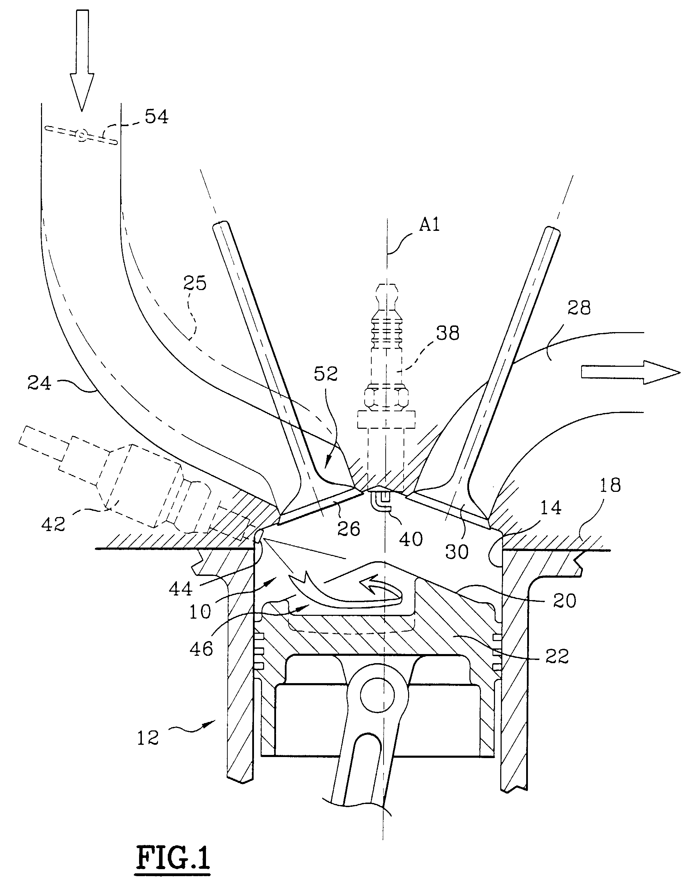

On a illustré sur la figure 1 un cylindre 10 d'un moteur à combustion interne à allumage commandé et à injection directe. Le cylindre 10, d'axe A1, est délimité dans un bloc-moteur 12 par une paroi cylindrique 14. Le cylindre 10 est délimité vers le haut par la face inférieure 16 d'une culasse 18 et, vers le bas, par la face supérieure 20 d'un piston 22 qui, de manière connue, est animé d'un mouvement alternatif de translation selon l'axe A1.

Deux conduits d'admission 24, 25 d'air sont aménagés dans la culasse 18 de manière à déboucher dans la face inférieure 16 de celle-ci. La communication entre les conduits d'admission 24 et le cylindre 10 est autorisée ou interrompue par des soupapes d'admission commandées 26, 27.

De la même manière, deux conduits d'échappement 28 débouchent dans le cylindre 10 par l'intermédiaire de soupapes d'échappement 30.

Dans l'exemple de réalisation illustré sur les figures, la face inférieure 16 de la culasse 18 est configurée en « toit » de sorte qu'elle présente deux pans 32, 34 qui sont sensiblement plans et inclinés de part et d'autre d'une arête sommitale 36. Les conduits d'admission 24 débouchent dans l'un 34 des pans tandis que les conduits d'échappement 28 débouchent dans l'autre 32 des pans. L'angle du toit formé par les deux pans 32, 34 est par exemple compris entre 125 et 150 degrés, ce qui correspond à un angle de 30 à 55 degrés entre les axes des soupapes d'admission 26 et d'échappement 30 qui sont respectivement sensiblement perpendiculaires au pan correspondant.

L'arête sommitale 36 et l'axe A1 du cylindre 10 déterminent ainsi un plan de référence qui délimite dans ce cylindre un côté admission et un côté échappement.

S'agissant d'un moteur à allumage commandé, une bougie d'allumage 38 est vissée dans la culasse 16 de telle sorte que ses électrodes 40 débouchent dans le cylindre 10 sensiblement au centre de la face inférieure 16 de la culasse 18. La bougie 38 est implantée sensiblement selon l'axe A1 du cylindre.

Selon un aspect de l'invention, l'un au moins des conduits d'admission 24 comporte des moyens pour créer, au moins pour certaines phases de fonctionnement du moteur, un mouvement tourbillonnaire dit de "swirl" dans le cylindre 10. Ces moyens peuvent être simplement constitués par la forme du conduit d'admission 24 mais ils peuvent aussi être constitués par des moyens additionnels interposés dans le conduit d'admission, mobiles ou fixes, et susceptibles de perturber l'écoulement de l'air dans le conduit 24 pour que, à l'intérieur du cylindre 10, soit créé un mouvement tourbillonnaire de rotation autour d'un axe parallèle l'axe A1 du cylindre.

Dans l'exemple de réalisation illustré sur les figures, seul un premier 24 des deux conduits d'admission est pourvu de moyens pour créer ce mouvement de "swirl". En l'occurrence le premier conduit 24 présente, à proximité de son débouché dans la face inférieure 16 de la culasse 18, une courbure 52 à très faible rayon qui génère un mouvement approprié des gaz lorsqu'ils contournent la soupape 26 lors de l'admission dans le cylindre.

Au contraire le second conduit d'admission 25 présente une forme optimisée pour permettre le passage d'un gros débit d'air pour favoriser le remplissage du cylindre, notamment aux fortes charges. Ce second conduit d'admission 25 est par ailleurs pourvu d'un volet d'obturation commandé 54 qui permet, par exemple aux faibles charges, d'obturer le second conduit 25 pour ne remplir le cylindre qu'avec de l'air qui a transité par le premier conduit d'admission 24. On obtient ainsi un mouvement de "swirl" particulièrement important dans le cylindre.

Pour favoriser ce mouvement de "swirl", la face supérieure 20 du piston 22 comporte par ailleurs un évidement concave 46 qui permet de conserver au mieux le mouvement de rotation des gaz admis dans le cylindre par les conduits d'admission 24. Comme on peut le voir par exemple sur la figure 1, cet évidement 46 est de préférence décalé par rapport à l'axe A1 de manière à être agencé sensiblement en dessous des soupapes d'admission 26.

Par ailleurs, on peut voir que la face supérieure 20 du piston 22 présente aussi, autour de l'évidement 46, une forme de toit qui permet d'une part de limiter le volume résiduel du cylindre lorsque le piston 22 est au point mort haut, afin d'obtenir un taux de compression adéquat des gaz, et d'autre part de créer un effet de chasse par lequel les gaz emprisonnés dans la face inférieure 16 de la culasse 18 et la face supérieure 20 du piston 22 se trouvent chassés selon une direction perpendiculaire à la direction de l'arête sommitale 36, en direction de l'axe A1.

Enfin, selon l'invention, on peut voir que le cylindre 10 comporte un injecteur 42 qui est implanté dans la culasse 18, entre les conduits d'admission, de manière que le nez 44 de l'injecteur débouche dans le pan 34 côté admission du cylindre.

Dans l'exemple de réalisation illustré, le nez d'injecteur 44 débouche radialement vers l'extérieur par rapport aux soupapes, en dessous de celles-ci. L'axe de l'injecteur 42 fait un angle d'environ 25 à 45° par rapport à un plan perpendiculaire à l'axe A1, de manière à projeter un jet de carburant en direction de l'évidement 46 du piston 22. Le jet de carburant peut être dirigé radialement vers l'axe A1 du cylindre, mais il est aussi possible d'utiliser un injecteur dont le jet de carburant soit désaxé d'environ 10 à 30 degrés en direction du premier conduit d'admission 24 qui crée le mouvement de swirl dans le cylindre.

Grâce à la disposition selon l'invention, il apparaît donc que, lorsque le carburant est injecté dans le cylindre, il tend à être entraîné par les gaz animés d'un mouvement tourbillonnaire.

Conformément aux enseignements de l'invention, l'évidement 46 comporte une paroi de fond 56 qui est sensiblement plane mais qui est inclinée par rapport à un plan horizontal perpendiculaire à l'axe A1 de telle manière que la ligne de plus grande pente de la paroi de fond 56 est orientée selon une direction sensiblement parallèle à l'arrête sommitale 36.

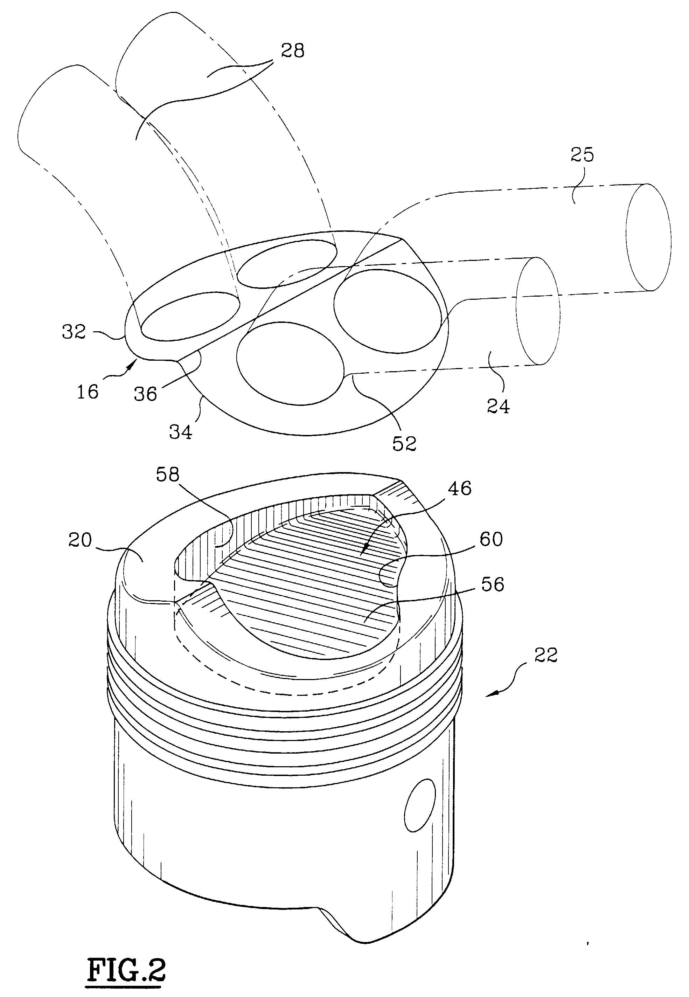

De la sorte, on peut voir par exemple sur la figure 2 que le premier conduit d'admission 24, qui comporte les moyens 52 pour générer le mouvement de swirl, débouche au-dessus de l'évidement 46, au-dessus de la portion de celui-ci qui présente la plus grande profondeur.

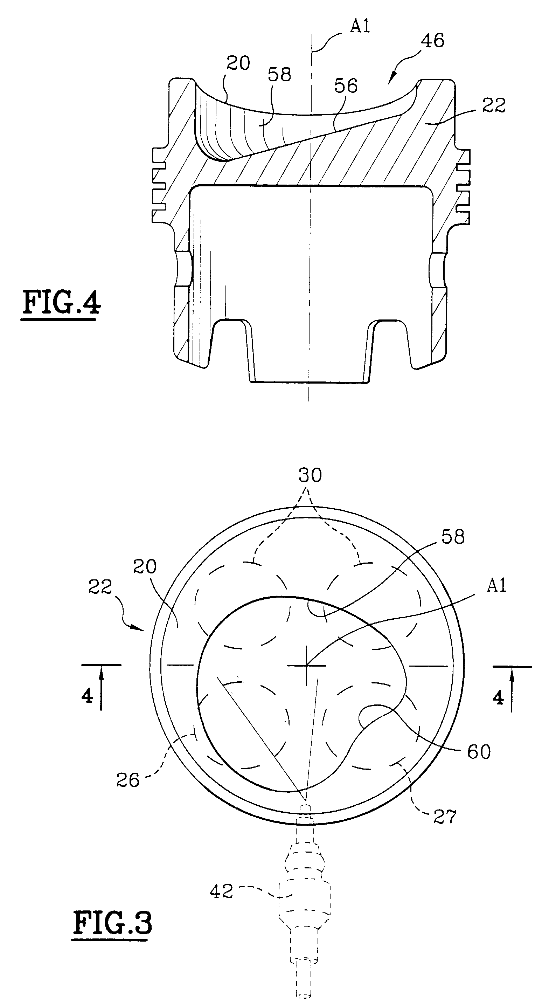

Ainsi, le mouvement de swirl, qui est créé dans l'évidement 46 et qui tend à tourner dans le sens horaire vu de dessus tel qu'illustré à la figure 3, pénètre à l'intérieur de l'évidement dans la zone la plus profonde de celui-ci et, canalisé par la paroi latérale 58 de l'évidement 46, il tend à remonter le long de la paroi de fond 56 de celui-ci. Ainsi, la paroi de fond inclinée 56 imprime au mouvement de swirl une composante supplémentaire ascensionnelle dans le cylindre.

Comme on peut le voir plus particulièrement sur la figure 3, la paroi latérale 58 de l'évidement 46 comporte par ailleurs un bossage 60 qui s'étend radialement vers l'intérieur et qui est agencé sensiblement en dessous du second 27 des conduits d'admission. Ainsi, le mouvement de swirl, après avoir longé la paroi latérale 58 de l'évidement 46 sur près de trois-quarts d'un tour, est défléchi radialement vers l'intérieur en direction de l'axe A1.

Grâce à la forme de l'évidement selon l'invention, les gaz sont non seulement animés d'un mouvement rendu ascendant par la paroi de fond 56, mais ce mouvement est par ailleurs concentré vers l'axe du cylindre A1 par le bossage 60 de manière que, du carburant projeté dans l'évidement 46 et entraîné par le mouvement tourbillonnaire de l'air admis, tend à être entraîné en direction de la bougie. Cela permet d'obtenir une charge stratifiée suffisamment riche localement au niveau de la bougie 38 pour obtenir l'inflammation du mélange, même dans le cas d'un mélange carburé globalement pauvre.

Le mouvement d'ascendance du mélange carburé, qui est obtenu grâce à l'inclinaison de la paroi de fond 56 de l'évidement 46, est particulièrement intéressant lorsque le toit formé par les pans 32, 34 de la face inférieure 16 de la culasse présente un angle réduit. En effet, l'arête sommitale 36 peut alors se trouver agencée assez loin de l'évidement 46, même lorsque le piston 22 est au point mort haut. Or, le mouvement d'ascendance permet alors l'utilisation d'une bougie comportant des électrodes à faible projection, c'est-à-dire ne pénétrant que d'une faible distance à l'intérieur du cylindre.

## Revendications

1. Moteur à combustion interne, à allumage commandé et à injection directe, du type dans lequel un cylindre d'axe vertical (A1) est délimité axialement vers le haut par une face inférieure (16) d'une culasse (18) dans laquelle débouchent, chacun par l'intermédiaire d'une soupape correspondante (26, 27, 30), deux conduits d'admission (24, 25) et au moins un conduit d'échappement (28), les soupapes d'admission (26,27) et d'échappement (30) étant agencées respectivement de part et d'autre d'un plan de référence (36) contenant l'axe du cylindre (A1), du type dans lequel au moins un des conduits d'admission (24, 25) comporte des moyens pour créer dans le cylindre un mouvement tourbillonnaire dit de "swirl" dans lequel les gaz contenus dans le cylindre sont animés d'un mouvement de rotation autour d'un axe sensiblement parallèle à l'axe (A1) du cylindre, et du type dans lequel le cylindre est délimité axialement vers le bas par un piston (22) dont une face supérieure (20) comporte un évidement (46), en direction duquel le carburant est injecté par un injecteur (42), et qui (46) comporte une paroi de fond (56) qui est sensiblement plane et qui est inclinée par rapport à un plan horizontal.
caractérisé en ce que la ligne de plus grande pente de la paroi de fond (56) de l'évidement (46) est sensiblement parallèle au plan de référence.

2. Moteur selon la revendication 1, caractérisé en ce que la pente de la paroi de fond (56) est de l'ordre de 15 degrés par rapport à l'horizontale.

3. Moteur selon l'une quelconque des revendications précédentes, caractérisé en ce qu'un premier (24) des conduits d'admission, qui comporte des moyens (52) pour créer le mouvement tourbillonnaire, est agencé de manière à déboucher en regard de la partie la plus basse de la paroi de fond (56) de l'évidement (46).

4. Moteur selon la revendication 3, caractérisé en ce que l'évidement (46) est délimité par une paroi latérale (58) munie d'un bossage (60) qui s'étend radialement vers l'intérieur et qui est agencé sensiblement en regard du second conduit d'admission (25).

5. Moteur selon l'une des revendications 3 ou 4, caractérisé en ce que le second conduit d'admission est dépourvu de moyens pour créer le mouvement tourbillonnaire.

6. Moteur selon la revend cation 5, caractérisé en ce que le second conduit d'admission (25) est pourvu de moyens de vannage (54) qui permettent de limiter la quantité d'air admis dans le cylindre au travers du second conduit (25).

7. Moteur selon l'une quelconque des revendications précédentes, caractérisé en ce que l'évidement (46) est décalé radialement par rapport à l'axe (A1) du cylindre en direction des soupapes d'admission (26, 27).

8. Moteur selon la revendication 7, caractérisé en ce que le cylindre comporte une bougie d'allumage (38) qui est implantée sensiblement au centre de la face inférieure (16) de la culasse (18).

9. Moteur selon l'une quelconque des revendications précédentes, caractérisé en ce que l'injecteur (42) est agencé pour déboucher dans la face inférieure (16) de la culasse (18), entre les deux conduits d'admission (24, 26).

10. Moteur selon l'une quelconque des revendications précédentes, caractérisé en ce que la face nférieure (16) de la culasse (18) est conformée selon un toit à deux pans (32, 34) inclinés de part et d'autre d'une arête sommitale (36) qui est sensiblement comprise dans le plan de référence.

11. Moteur selon la revendication 10, caractérisé en ce que l'angle du toit est compris entre 125 et 150 degrés.
